# EUROPEAN PATENT SPECIFICATION

(11) **EP 2 486 082 B1**
(45) Date of publication and mention of the grant of the patent: **11.03.2015**
(21) Application number: 10766348.6
(22) Date of filing: 28.09.2010
(51) Int. Cl.: C08G 77/445

(54) **PROCESS FOR PRODUCING ARAMID SILICONE POLYMER**
VERFAHREN ZUR HERSTELLUNG VON ARAMIDSILICIUMPOLYMER
PROCÉDÉ DE PRODUCTION DE POLYMÈRES D'ARAMIDE ET DE SILICONE

(30) Priority: 06.10.2009 JP 2009232770
(43) Date of publication of application: 15.08.2012
(73) Proprietor: Dow Corning Toray Co., Ltd., Tokyo, 100-0004 (JP)
(72) Inventor: NISHIJIMA Kazuhiro, Ichihara-shi, Chiba 299-0108 (JP); OKAWA Tadashi, Ichihara-shi, Chiba 299-0108 (JP)
(74) Representative: Thomson, Craig Richard
(86) International application number: PCT/JP2010/067313
(87) International publication number: WO 2011/043276

(56) References cited:
- JP-A- 1 123 824
- JP-A- 3 035 059
- US-B1- 6 503 632

## Description

### TECHNICAL FIELD

The present invention relates to a process for producing an aramid silicone polymer containing an aromatic polyamide (aramid) moiety and a polysiloxane moiety.

Priority is claimed on Japanese Patent Application No. 2009-232770, filed on October 6, 2009.

### BACKGROUND ART

A silicone polymer represented by a polydimethylsiloxane possesses superior biocompatibility, gas permeation properties and the like, but has poor strength. For this reason, application thereof to a field requiring strong strength has been limited. On the other hand, an aromatic polyamide (aramid) possesses superior strength, but has poor biocompatibility and the like. Therefore, the usage thereof has been limited.

As a material overcoming the aforementioned problems, an aramid silicone polymer has been proposed. As a process for producing an aramid silicone polymer, the so-called "low-temperature solution polycondensation process" is known, in which a both-terminal amino group-blocked polysiloxane, an aromatic diamine, and an aromatic dicarboxylic acid dichloride are subjected to polycondensation using triethylamine or the like as a hydrogen chloride trapping agent, at a low temperature of 10°C or less (for example, see Japanese Unexamined Patent Application, First Publication No. H01-123824; and Japanese Unexamined Patent Application, First Publication No. H03-35059).

Prior art document US6503632 discloses a polydialkylsiloxane/polyamide copolymer, a process for producing same, and various materials such as ophthalmic materials such as contact lenses and intraocular lenses, medical materials such as antithrombotic materials, and a variety of cosmetic compositions or electronic materials formed with the copolymer. The polydialkylsiloxane/polyamide copolymer is obtained by polymerizing an amino compound represented by the formula (1) and having amino groups at both ends and a dialkylsiloxane chain.

### DISCLOSURE OF THE INVENTION

### Technical Problems

However, the low-temperature solution polycondensation process requires a highly efficient cooling system, and must carry out a disposal treatment for organic salts such as triethylamine hydrochloride and the like which are by-products. In addition, there is a problem in that a large amount of a reprecipitation solvent such as methanol is required in order to recover the produced aramid silicone polymer. Therefore, the low-temperature solution polycondensation process is not suitable for mass production of an aramid silicone polymer.

The present invention has an objective to provide a process for producing an aramid silicone polymer, which is not necessary to carry out at a low temperature, in which by-products can be easily treated, which does not require a large amount of a reprecipitation solvent, and which can be suitably used in mass production of an aramid silicone polymer.

### Technical Solution

The aforementioned objective of the present invention can be achieved by a process for producing an aramid silicone polymer characterized by reacting
(A) a both-terminal amino-modified diorganopolysiloxane having a group represented by the following formula: -B-NH₂ wherein B represents a divalent hydrocarbon group, at each of both terminals of a molecular chain,
(B) an aromatic diamine, and
(C) an aromatic dicarboxylic acid dihalide,
in the presence of (D) an inorganic base, in (S1) water and (S2) an aprotic organic solvent, at a temperature of 10°C or more.

The aforementioned reaction is preferably an interfacial polycondensation.

In the process for producing an aramid silicone polymer of the present invention, the aforementioned aromatic dicarboxylic acid dihalide (C) is added to a mixture obtained by combining a mixture of the aforementioned inorganic base (D) and the aforementioned water (S1) with a mixture of the aforementioned both-terminal amino-modified diorganopolysiloxane (A), the aforementioned aromatic diamine (B) and the aforementioned aprotic organic solvent (S2), at a temperature of 10°C or more to react them. In this case, the aforementioned aromatic dicarboxylic acid dihalide (C) is preferably in the form of a mixture with the aforementioned aprotic organic solvent (S2).

The aforementioned both-terminal amino-modified diorganopolysiloxane (A) is preferably represented by the following general formula: 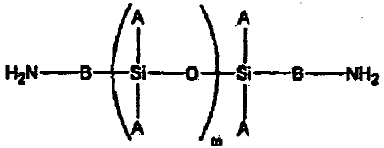 wherein B represents a divalent hydrocarbon group; A independently represents a monovalent hydrocarbon group; and m represents an integer ranging from 1 to 100. The aforementioned m preferably ranges from 1 to 20.

The aforementioned aprotic organic solvent (S2) is preferably non-miscible with water.

The aforementioned inorganic base (D) is preferably at least one selected from the group consisting of alkali metal hydroxides, alkaline earth metal hydroxides, alkali metal carbonates, alkali metal bicarbonates, and alkaline earth metal carbonates.

The aforementioned aprotic organic solvent (S2) is preferably at least one selected from the group consisting of ether-based solvents, halogenated hydrocarbon-based solvents, sulfoxide-based solvents, amide-based solvents, ester-based solvents, and ether ester-based solvents.

The weight ratio of the weight of the aforementioned aromatic diamine (B) with respect to the total weight of the aforementioned both-terminal amino-modified diorganopolysiloxane (A) and the aforementioned aromatic diamine (B) preferably ranges from 0.01 to 0.6.

The molar ratio of the total moles of the aforementioned both-terminal amino-modified diorganopolysiloxane (A) and the aforementioned aromatic diamine (B) with respect to the moles of the aforementioned aromatic dicarboxylic acid dihalide (C) preferably ranges from 0.8 to 1.2.

The ratio of the equivalent weight of the aforementioned inorganic base (D) with respect to the equivalent weight of the aforementioned aromatic dicarboxylic acid dihalide (C) preferably ranges from 1 to 2.

The weight ratio of the aforementioned water (S1) and the aforementioned aprotic organic solvent (S2) can range from 1:10 to 10:1.

### Advantageous Effects

In the process for producing an aramid silicone polymer of the present invention, it is not necessary to carry out the process at a low temperature, and for this reason, a cooling system is not necessary. In addition, in the process for producing an aramid silicone polymer of the present invention, by-products including halogens are produced, but the aforementioned by-products are only inorganic salts. Therefore, the treatment thereof is easier than the treatment of organic salts. In addition, in the process for producing an aramid silicone polymer of the present invention, a large amount of a reprecipitation solvent such as methanol or the like is not used.

As described above, the process for producing an aramid silicone polymer of the present invention, which is different from conventional low-temperature solution polycondensation processes, can be carried out at room temperature, the treatment of by-products is easy, and a large amount of a reprecipitation solvent is not necessary. Therefore, the process for producing an aramid silicone polymer of the present invention can be carried out in a simple and convenient system, decreases the burden on the environment, and is economically effective. For these reasons, the process of the present invention can be preferably used in mass production of aramid silicone polymers. In addition, in the present invention, an aramid silicone polymer having a high molecular weight can be produced.

### Best Mode for Carrying Out the Invention

In the present invention, an aramid silicone polymer is produced by reacting
(A) a both-terminal amino-modified diorganopolysiloxane having a group represented by the following formula: -B-NH₂ wherein B represents a divalent hydrocarbon group, at each of both terminals of a molecular chain,
(B) an aromatic diamine, and
(C) an aromatic dicarboxylic acid dihalide,
in the presence of (D) an inorganic base, in (S1) water and (S2) an aprotic organic solvent, at a temperature of 10°C or more.

The aforementioned both-terminal amino-modified diorganopolysiloxane (A) used in the present invention is a diorganopolysiloxane having a group represented by the following formula: -B-NH₂ wherein B represents a divalent hydrocarbon group, at each of both terminals of a molecular chain. A single type of the both-terminal amino-modified diorganopolysiloxane may be used or two or more types of the both-terminal amino-modified diorganopolysiloxanes may also be used.

As examples of divalent hydrocarbon groups, mention may be made of, for example, a substituted or non-substituted, linear or branched alkylene group having 1 carbon atom to 22 carbon atoms, a substituted or non-substituted arylene group having 6 to 22 carbon atoms, or a substituted or non-substituted alkylene-arylene group having 7 to 22 carbon atoms. As examples of substituted or non-substituted, linear or branched alkylene groups having 1 carbon atom to 22 carbon atoms, mention may be made of, for example, a methylene group, a dimethylene group, a trimethylene group, a tetramethylene group, a pentamethylene group, a hexamethylene group, a heptamethylene group, an octamethylene group, and the like. A methylene group, a dimethylene group, or a trimethylene group is preferable. As examples of substituted or non-substituted arylene groups having 6 to 22 carbon atoms, mention may be made of, for example, a phenylene group, a diphenylene group, and the like. As examples of substituted or non-substituted alkylene-arylene groups having 7 to 22 carbon atoms, mention may be made of, for example, a dimethylenephenylene group and the like.

As the both-terminal amino-modified diorganopolysiloxane (A), those represented by the following general formula: 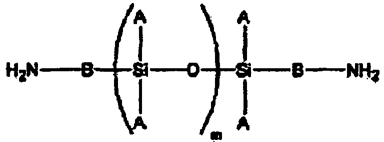 wherein B represents a divalent hydrocarbon group; A independently represents a monovalent hydrocarbon group; and m represents an integer ranging from 1 to 100, are preferred.

As examples of monovalent hydrocarbon groups, mention may be made of, for example, alkyl groups such as a methyl group, an ethyl group, a propyl group, a butyl group, a pentyl group, a hexyl group, a heptyl group, an octyl group, a decyl group, a dodecyl group, and the like; cycloalkyl groups such as a cyclopentyl group, a cyclohexyl group, and the like; alkenyl groups such as a vinyl group, an allyl group, a butenyl group, and the like; aryl groups such as phenyl group, a tolyl group, a xylyl group, a naphthyl group, and the like; aralkyl groups such as a benzyl group, a phenethyl group, and the like; and organic group-substituted groups thereof in which at least one hydrogen atom binding to the carbon atom of the aforementioned groups is at least partially replaced with a halogen atom such as a fluorine atom or the like or an organic group which includes an epoxy group, a glycidyl group, an acyl group, a carboxyl group, an amino group, a methacryl group, a mercapto group, and the like. The monovalent hydrocarbon group is preferably a group other than an alkenyl group, and is, in particular, preferably a methyl group, an ethyl group or a phenyl group.

In the aforementioned general formula, m ranges from 1 to 100, preferably ranges from 1 to 50, and more preferably ranges from 1 to 20. If m exceeds 100, the proportion of the amide bonds in the molecule is reduced, and the physical strength of the obtained polymer may be reduced.

The aforementioned aromatic diamine (B) used in the present invention is not particularly limited, and any can be used. As the aforementioned aromatic diamine (B), those used as raw materials in the conventional production of an aramid are preferred, and for example, m-phenylenediamine, p-phenylenediamine, 4,4'-diaminodiphenyl ether, 3,4'-diaminodiphenyl ether, 4,4'-diaminodiphenylsulfone, 3,3'-diaminodiphenylsulfone, 2,2'-ditrifluoromethyl-4,4'-diaminobiphenyl, 9,9-bis(4-aminophenyl)fluorene, 9,9-bis(4-amino-3-methylphenyl)fluorene, bis[4-(4-aminophenoxy)phenyl]sulfone, bis[4-(3-aminophenoxy)phenyl]sulfone, 2,2-bis[4-(4-aminophenoxy)phenyl]propane, 2,2-bis(4-aminophenyl)hexafluoropropane and the like are preferably used. A single type of the aromatic diamine may be used, and two or more types of the aromatic diamines may also be used.

The aforementioned aromatic dicarboxylic acid dihalide (C) used in the present invention is not particularly limited, and any one can be used. As the dihalide, any one of a fluoride, a chloride, a bromide, and an iodide can be used. A chloride is preferable. As the aforementioned aromatic dicarboxylic acid dihalide (C), those used as raw materials in the conventional production of an aramid are preferred, and for example, terephthalic acid dichloride, 2-chloro-terephthalic acid dichloride, isophthalic acid dichloride, naphthalene dicarbonyl chloride, biphenyl dicarbonyl chloride, terphenyl dicarbonyl chloride, 2-chloro-terephthalic acid dichloride, and the like are preferably used. A single type of the aromatic dicarboxylic acid dihalide may be used, and two or more types of the aromatic dicarboxylic acid dihalides may also be used.

The aforementioned inorganic base (D) used in the present invention is not particularly limited, and any can be used. A single type of the organic base may be used, and two or more types of the organic bases may also be used. As the aforementioned inorganic base (D), at least one selected from the group consisting of alkali metal hydroxides, alkaline earth metal hydroxides, alkali metal carbonates, alkali metal bicarbonates, and alkaline earth metal carbonates is preferred. For example, sodium hydroxide, potassium hydroxide, calcium hydroxide, sodium carbonate, sodium bicarbonate, calcium carbonate, or the like can be suitably used.

The aforementioned aprotic organic solvent (S2) used in the present invention is an organic solvent having no proton-donating ability. As the aprotic organic solvent, either a polar one or a non-polar one can be used. An aprotic organic solvent having at least a certain polarity is preferred. In addition, the aforementioned aprotic organic solvent (S2) is preferably non-miscible with water, and one which can occur as a phase separation with respect to water is preferred, but not limited thereto. As the aforementioned aprotic organic solvent (S2), an ether-based solvent such as diethyl ether, tetrahydrofuran, dioxane or the like; a halogenated hydrocarbon-based solvent such as methylene chloride, trichloroethane, 1,2-dichloroethane or the like; a sulfoxide-based solvent such as dimethylsulfoxide, diethylsulfoxide, or the like; an amide-based solvent such as N,N-dimethylformamide, N,N-diethylformamide, N,N-dimethylacetamide, N,N-diethylacetamide, N-methyl-2-pyrrolidone, N-vinyl-2-pyrrolidone, or the like; an ester-based solvent such as ethyl acetate, gamma-butyrolactone or the like; an ether ester-based solvent such as propylene glycol monomethyl ether acetate, ethylene glycol monomethyl ether acetate, or the like; hexamethylphosphoamide and the like are preferably used. Tetrahydrofuran, and propylene glycol monomethyl ether acetate are, in particular, preferred. A single type of the aprotic organic solvent may be used, and two or more types of aprotic organic solvents may also be used. In the present invention, by use of the aforementioned aprotic organic solvent (S2), an aramid silicone polymer having a high molecular weight can be obtained.

In the present invention, use of a protic organic solvent, such as an alcohol, a phenol or the like, and use of an aldehyde, a ketone, and in particular, a beta-diketone, and a ketoester, and in particular, a beta-ketoester, which produce an active hydrogen by forming an enol, are not preferred. Therefore, the aforementioned organic solvents are preferably absent in the reaction system. The aforementioned organic solvents react with the aforementioned aromatic dicarboxylic acid dihalide (C), and thereby, reduce the molecular weight and physical strength of the aramid silicone polymer, and at the same time, cause non-preferable colorization.

In the present invention, the aforementioned both-terminal amino-modified diorganopolysiloxane (A), the aforementioned aromatic diamine (B), and the aforementioned aromatic dicarboxylic acid dihalide (C) are reacted in the presence of the aforementioned inorganic base (D), in a mixture of water (S1) and the aforementioned aprotic organic solvent (S2). The mixing ratio of water (S1) and the aforementioned aprotic organic solvent (S2) is not limited, and ranges from 1:10 to 10:1, preferably ranges from 20:80 to 80:20, and more preferably ranges from 30:70 to 70:30. They can be mixed in the aforementioned mixing ratio and then used.

In the present invention, the usage proportion of the aforementioned both-terminal amino-modified diorganopolysiloxane (A) and the aforementioned aromatic diamine (B) is not limited. However, if the proportion of the latter is increased, solubility of the produced aramid silicone polymer with respect to an organic solvent may be reduced. As a result, the molecular weight of the aramid silicone polymer may be reduced and the polymer may become brittle. For this reason, the proportion of the latter preferably ranges from 1 to 60% by weight and more preferably ranges from 1 to 50% by weight with respect to the total weight of the aforementioned both-terminal amino-modified diorganopolysiloxane (A) and the aforementioned aromatic diamine (B). In other words, the ratio of the weight of the aforementioned aromatic diamine (B) with respect to the total weight of the aforementioned both-terminal amino-modified diorganopolysiloxane (A) and the aforementioned aromatic diamine (B) preferably ranges from 0.01 to 0.6 and more preferably ranges from 0.01 to 0.5.

The molar ratio of the total moles of the aforementioned both-terminal amino-modified diorganopolysiloxane (A) and the aforementioned aromatic diamine (B) with respect to the moles of the aforementioned aromatic dicarboxylic acid dihalide (C) is also not limited. However, if the aforementioned ratio largely exceeds 1, the molecular weight of the obtained aramid silicone polymer may be reduced and the physical strength thereof may be reduced. For this reason, the aforementioned ratio is preferably close to 1. Therefore, the molar ratio of the total moles of the aforementioned both-terminal amino-modified diorganopolysiloxane (A) and the aforementioned aromatic diamine (B) with respect to the moles of the aforementioned aromatic dicarboxylic acid dihalide (C) preferably ranges from 0.8 to 1.2, more preferably ranges from 0.9 to 1.1 and in particular, preferably ranges from 0.95 to 1.05.

In addition, the usage amount of the aforementioned inorganic base (D) is not limited. The equivalent weight of the aforementioned inorganic base (D) is preferably equal to or more than the equivalent weight of the aforementioned aromatic dicarboxylic acid dihalide (C), that is, the stoichiometric amount or more. If the equivalent weight of the aforementioned inorganic base (D) is below the stoichiometric amount, neutralization may be insufficient, and the halogen concentration in the aramid silicone polymer may be increased. However, if a large excess amount thereof is used, it may be difficult to reduce the concentration of the residual inorganic base (D) in the aramid silicone polymer by washing with water. For this reason, the ratio of the equivalent weight of "the aforementioned inorganic base (D)"/"the aforementioned aromatic dicarboxylic acid dihalide (C)" is preferably 1 or more, but 2 or less, and is more preferably 1 or more, but 1.5 or less. Therefore, the ratio of the equivalent weight of the inorganic base (D) with respect to the equivalent weight of the aforementioned aromatic dicarboxylic acid dihalide (C) preferably ranges from 1 to 2 and more preferably ranges from 1 to 1.5.

In the present invention, the reaction mode of reacting the aforementioned both-terminal amino-modified diorganopolysiloxane (A), the aforementioned aromatic diamine (B), and the aforementioned aromatic dicarboxylic acid dihalide (C) in the presence of the aforementioned inorganic base (D), in a mixture of water (S1) and the aforementioned aprotic organic solvent (S2) is not particularly limited. A method in which a mixture of the aforementioned inorganic base (D) and water (S1) is mixed with a mixture of the aforementioned both-terminal amino-modified diorganopolysiloxane (A), the aforementioned aromatic diamine (B), and the aforementioned aprotic organic solvent (S2); and then the aforementioned aromatic dicarboxylic acid dihalide (C) is added thereto while the obtained mixture is heated or cooled and stirred, if necessary, and is maintained at a temperature of 10°C Or more.

The mixture of the aforementioned inorganic base (D) and water (S1) is preferably in the form of an aqueous solution of the aforementioned inorganic base (D). Therefore, the aforementioned inorganic base (D) is preferably water-soluble. In addition, the mixture of the aforementioned both-terminal amino-modified diorganopolysiloxane (A), the aforementioned aromatic diamine (B), and the aforementioned aprotic organic solvent (S2) is preferably in the form of a solution in which the aforementioned both-terminal amino-modified diorganopolysiloxane (A) and the aforementioned aromatic diamine (B) are dissolved in the aforementioned aprotic organic solvent (S2). Therefore, the aforementioned both-terminal amino-modified diorganopolysiloxane (A) and the aforementioned aromatic diamine (B) preferably have solubility with respect to the aforementioned aprotic organic solvent (S2).

In addition, the aforementioned aromatic dicarboxylic acid dihalide (C) is preferably a mixture with the aforementioned aprotic organic solvent (S2). Therefore, the aforementioned aromatic dicarboxylic acid dihalide (C) preferably has solubility with respect to the aforementioned aprotic organic solvent (S2). In this case, a part of the aforementioned aprotic organic solvent (S2) is used for dissolving the aforementioned aromatic dicarboxylic acid dihalide (C), and the residue of the aforementioned aprotic organic solvent (S2) can be used for dissolving the aforementioned both-terminal amino-modified diorganopolysiloxane (A) and the aforementioned aromatic diamine (B).

The aforementioned aromatic dicarboxylic acid dihalide (C) is added to a mixture of the aforementioned both-terminal amino-modified diorganopolysiloxane (A) and the aforementioned aromatic diamine (B), and thereby, a polycondensation reaction initiates, and an aramid silicone polymer is synthesized. The aforementioned polycondensation reaction is preferably an interfacial polycondensation. Therefore, a method for adding the aforementioned aromatic dicarboxylic acid dihalide (C) to a mixture of the aforementioned both-terminal amino-modified diorganopolysiloxane (A) and the aforementioned aromatic diamine (B) is preferably a dropping method.

The reaction temperature of the present invention is 10°C or more, and may be higher than that. For example, the present invention can be carried out at 15°C or more, is preferably carried out at 20°C or more, and is more preferably carried out at 25°C or more. In order to obtain a polymer having a high molecular weight by inhibiting a simple hydrolysis reaction of the aforementioned aromatic dicarboxylic acid dihalide (C), the reaction temperature is preferably 40°C or less. Therefore, the reaction temperature of the present invention preferably ranges from 10°C to 40°C. As described above, in the present invention, it is not necessary to carry out the reaction under a low temperature condition. For this reason, a especial manufacturing apparatus such as a cooling apparatus or the like is not required. Therefore, the present invention can simply and efficiently produce an aramid silicone polymer and is economically advantageous.

In the present invention, by the reaction of the aforementioned both-terminal amino-modified diorganopolysiloxane (A), the aforementioned aromatic diamine (B), and the aforementioned aromatic dicarboxylic acid dihalide (C), a hydrogen halide such as hydrogen chloride or the like is produced. The aforementioned hydrogen halide is converted into an inorganic salt such as NaCl or the like by capturing by means of the aforementioned inorganic base (D). As described above, in the present invention, the by-product is an inorganic salt, and for this reason, the treatment thereof is easily carried out. Therefore, the present invention can be carried out with reduced environmental burdens and with a reduced cost.

In the present invention, after the aforementioned aromatic dicarboxylic acid dihalide (C) is added to the aforementioned both-terminal amino-modified diorganopolysiloxane (A) and the aforementioned aromatic diamine (B), it is preferable that the obtained reaction mixture is continuously stirred, and the development of the reaction is preferably periodically checked by means of a pH test paper or the like.

After completion of the reaction, for example, the reaction mixture is allowed to stand to separate layers. An organic solvent which is miscible with water may be added thereto, if necessary, and washing of the organic layer with water may be repeated to remove the excess inorganic base. Subsequently, azeotropic dehydration may be carried out. Thereby, a solution of an aramid silicone polymer can be obtained. In addition, if necessary, the solvent is removed by heating under reduced pressure. Thereby, an aramid silicone polymer in the form of a solid can be obtained. As the aforementioned organic solvent, an aprotic organic solvent is preferred, and is more preferably the same type as the aforementioned aprotic organic solvent (S2) which is originally present in the reaction system.

In the case in which the content rate of the silicone of the aramid silicone polymer is low, the polarity of the aprotic solvent used in the reaction may become insufficient, and the aramid silicone polymer may be precipitated in the form of a paste after the reaction is completed, in some cases. In this case, after excess inorganic base is removed by repeating washing with water, an aprotic solvent such as toluene is added to the aramid silicone polymer in the form of a paste, and water is removed by carrying out azeotropic dehydration. Subsequently, an amide-based solvent such as N,N-dimethylformamide, N,N-dimethylacetamide, N-methyl-2-pyrrolidone or the like which exhibits superior dissolving power is added thereto, and the nonpolar solvent previously added is removed by heating under reduced pressure. Thereby, a solution in which the aramid silicone polymer is dissolved in the amide-based solvent can be obtained. If necessary, the amide-based solvent may be removed by heating under reduced pressure, and thereby, the aramid silicone polymer in the form of a solid can be obtained.

In the present invention, it is not necessary to add a large amount of a solvent for use in re-precipitation such as methanol or the like in order to recover the aramid silicone polymer from the reaction system. Therefore, the present invention decreases the burden on the environment, and is economically effective. In addition, superior producibility of the aramid silicone polymer can be exhibited.

The aramid silicone polymer obtained in the present invention is a copolymer containing an aramid moiety and a silicone moiety. The proportion of the aramid moiety and the silicone moiety is not particularly limited. The weight ratio of the aramid moiety:the silicone moiety preferably ranges from 20:80 to 80:20, and more preferably ranges from 30:70 to 70:30. The aramid silicone copolymer may be any one of a random copolymer and a block copolymer.

The aramid silicone polymer obtained by the present invention can be suitably used as, for example, a material for medical use, an electronic material used in a semiconductor device, by virtue of increased strength of the aramid moiety and increased biocompatibility, gas permeation properties, thermal resistance and the like, of the silicone moiety.

### EXAMPLES

The present invention is described below in detail with reference to examples. It should be understood that the present invention is not limited thereto.

### Example 1:

### Process A

A mixture of 3.2 g (16 mmol) of 4,4'-diaminodiphenyl ether, 50 g (54.6 mmol) of a both-terminal aminopropyl group-blocked polydimethylsiloxane (degree of polymerization = 9), 9.4 g (88.2 mmol) of sodium carbonate, 220 g of PGMEA (propylene glycol methyl ether acetate) and 200 g of water was stirred, and a solution obtained by dissolving 14.3 g (70.6 mmol) of isophthalic acid dichloride in PGMEA (100 g) was added dropwise to the mixture while cooling with water. The mixture was stirred for one hour at room temperature, and subsequently, allowed to stand to separate phases. The organic layer was repeatedly washed with water, and subjected to azeotropic dehydration. Thereby, 279 g (yield = 97%) of a PGMEA solution of an aramid silicone copolymer having 80% by weight of a silicone content and 21.6% by weight of a concentration of a solid content. The aforementioned solution was placed in a Teflon (trademark) dish, and allowed to stand for one hour at 180°C in a heated oven. Thereby, a nearly transparent light brown film was obtained. The aforementioned film had a tensile strength of 12.7 MPa and an elongation of 600%.

### Example 2:

### Process B

A mixture of 2.6 g (12.9 mmol) of 4,4'-diaminodiphenyl ether, 5 g (5.6 mmol) of a both-terminal aminopropyl group-blocked polydimethylsiloxane (degree of polymerization = 9), 2.5 g (23.1 mmol) of sodium carbonate, 40 g of THF (tetrahydrofuran) and 40 g of water was stirred, and a solution obtained by dissolving 3.8 g (18.5 mmol) of isophthalic acid dichloride in THF (10 g) was added dropwise to the mixture while cooling with water. The mixture was stirred for one hour at 25°C, and subsequently, 100 g of water was poured thereinto, and thereby, a solid copolymer was obtained. Water was removed by azeotropic dehydration with 30 g of toluene from the solid copolymer. In addition, 40 g of N-methylpyrrolidone (NMP) was added thereto, and azeotropic dehydration was further carried out. Toluene was removed by heating under reduced pressure. Thereby, 51 g of an NMP solution of an aramid silicone copolymer having 18.7% by weight of a solid content and having 50% by weight of a silicone content was obtained (yield = 95.5%). The aforementioned solution was placed in a Teflon (trademark) dish, and allowed to stand for one hour at 180°C in a heated oven. Thereby, a clouded light brown film was obtained. The aforementioned film had a tensile strength of 45.6 MPa and an elongation of 100%.

### Example 3:

### Process C

A mixture of 0.52 g (2.6 mmol) of 4,4'-diaminodiphenyl ether, 5 g (2.9 mmol) of a both-terminal aminopropyl group-blocked polydimethylsiloxane (degree of polymerization = 20), 0.73 g (6.9 mmol) of sodium carbonate, 22 g of THF (tetrahydrofuran) and 17 g of water was stirred, and a solution obtained by dissolving 1.1 g (5.5 mmol) of isophthalic acid dichloride in THF (10 g) was added dropwise to the mixture while cooling with water. The mixture was stirred for one hour at 25°C, and subsequently, 150 g of water was poured thereinto. Thereby, a solid copolymer was obtained. The solid copolymer was heated under reduced pressure and dried. Thereby, 5.6 g of an aramid silicone copolymer having 80% by weight of a silicone content was obtained (yield = 90%). An NMP solution of the aforementioned copolymer was placed in a Teflon (tradename) dish, and allowed to stand for one hour at 180°C in a heated oven. Thereby, a slightly clouded light brown film was obtained. The aforementioned film had a tensile strength of 6.5 MPa and an elongation of 300%.

As shown in Table 1 to Table 3, aramid silicone polymers were synthesized by changing the reaction conditions on the basis of Example 1 and Example 2. The results are also shown in Table 1 to Table 3.

**Table 1**

| | Example 4 | Example 5 | Example 6 | Example 7 |
|---|---|---|---|---|
| Isophthalic acid dichloride | 2.7 g (13.5 mmol) | 2.5 g (12.3 mmol) | 1.9 g (9.2 mmol) | 1.4 g (6.8 mmol) |
| 4,4'-diaminodiphenyl ether | 1.6 g (7.8 mmol) | - | - | - |
| 3,3'-diaminodiphenyl sulfone | - | 1.7 g (6.9 mmol) | 0.94 g (3.8 mmol) | 0.35 g (1.4 mmol) |
| Both-terminal aminopropyl group-blocked polydimethylsiloxane (polymerization degree=9) | 5 g (5.6 mmol) | - | - | - |
| Both-terminal aminopropyl group-blocked polymethylphenylsiloxane (polymerization degree-5) | - | 5 g (5.4 mmol) | 5 g (5.4 mmol) | 5 g (5.4 mmol) |
| Sodium carbonate | 1.8 g (16.8 mmol) | 1.6 g (15.4 mmol) | 1.2 g (11.5 mmol) | 0.9 g (8.5 mmol) |
| THF | 40 g | 40 g | 35 g | 32 g |
| Water | 30 g | 30 g | 25 g | 22 g |
| Reaction process | Process B | Process A | Process A | Process A |
| Reaction temperature | 25°C | 25°C | 25°C | 25°C |
| Yield | 98.2% | 93% | 89% | 88% |
| Tensile strength | 35.5 MPa | 17.7 MPa | 10.1 MPa | 1.5 MPa |
| Silicone content | 60% by weight | 60% by weight | 70% by weight | 80% by weight |

**Table 2**

| | Example 8 | Example 9 | Example 10 | Example 11 |
|---|---|---|---|---|
| Isophthalic acid dichloride | 1.6 g (7.9 mmol) | 2.5 g (12.3 mmol) | 1.9 g (9.2 mmol) | 2.0 g (9.7 mmol) |
| 4,4'-diaminodiphenyl ether | - | - | - | 0.9 g (4.3 mmol) |
| 3,3'-diaminodiphenyl sulfone | 1.1 g (4.5 mmol) | 1.7 g (6.9 mmol) | 0.94 g (3.8 mmol) | - |
| Both-terminal aminopropyl group-blocked polydimethylsiloxane (polymerization degree=9) | - | 5 g (5.4 mmol) | 5 g (5.4 mmol) | |
| Both-terminal aminopropyl group-blocked polymethylphenylsiloxane (polymerization degree=9) | 5 g (3.4 mmol) | - | - | - |
| Both-terminal aminopropyl group-blocked polymethylphenylsiloxane (polymerization degree=5) | - | - | - | 5 g (5.4 mmol) |
| Sodium carbonate | 1.0 g (9.9 mmol) | 1.6 g (15.4 mmol) | 1.2 g (11.5 mmol) | 1.3 g (12.2 mmol) |
| THF | 35 g | 40 g | 35 g | 54 g |
| Water | 25 g | 30 g | 25 g | 29 g |
| Reaction process | Process A | Process A | Process A | Process A |
| Reaction temperature | 25°C | 25°C | 25°C | 25°C |
| Yield | 93% | 92% | 92% | 82% |
| Tensile strength | 5.1 MPa | B.3 MPa | 6.6 MPa | 25.9 MPa |
| Silicone content | 70% by weight | 60% by weight | 70% by weight | 70% by weight |

**Table 3**

| | Example 12 | Example 13 | Example 14 |
|---|---|---|---|
| Isophthalic acid dichloride | 1.9 g (9.2 mmol) | 2.0 g (9.9 mmol) | 2.0 g (9.9 mmol) |
| 4,4'-diaminophenyl ether | 0.9 g (4.7 mmol) | 0.8 g (4.2 mmol) | 0.8 g (4.2 mmol) |
| Both-terminal aminopropyl group-blocked polydimethylsiloxane (polymerization degree=9) | - | 5 g (5.7 nmol) | - |
| Both-terminal aminopropyl group-blocked polymethylphenylmethylvin ylsiloxane A | 5 g (4.5 mmol) | - | - |
| Both-terminal aminopropyl group-blocked polydimethylmethylvinylsi loxane B | - | - | 5 g (5.7 mmol) |
| Sodium carbonate | 1.2 g (11.5 mmol) | 1.3 g (12.4 mmol) | 1.3 g (12.3 mmol) |
| THF | 54 g | 54 g | 54 g |
| Water | 28 g | 30 g | 30 g |
| Reaction process | Process A | Process B | Process B |
| Reaction temperature | 25°C | 25°C | 25°C |
| Yield | 83% | 90% | 81% |
| Tensile strength | 20.1 MPa | 24.9 MPa | 24.5 MPa |
| Silicone content | 70% by weight | 70% by weight | 70% by weight |

The both-terminal aminopropyl group-blocked polymethylphenylmethylvinylsiloxane A and both-terminal aminopropyl group-blocked polydimethylmethylvinylsiloxane B respectively have the following structures:

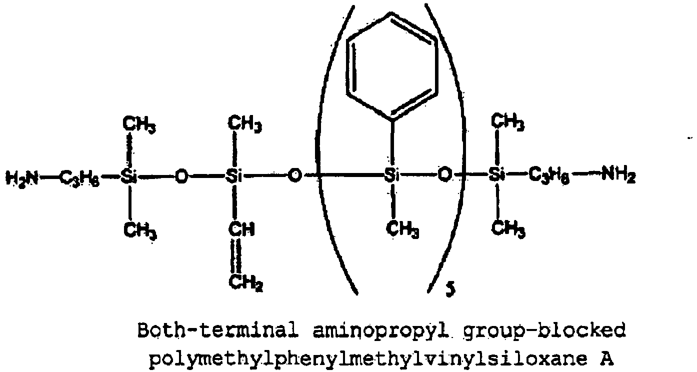

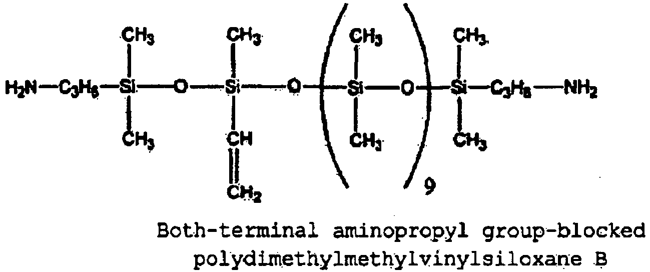

### Industrial Applicability

The present invention can be preferably used for the preparation, in particular mass production, of an aramid silicone polymer, because the present invention can be carried out in a simple system, can decrease the burden on the environment, and is economically effective. Furthermore, the aramid silicone polymer prepared by the present invention can have a high molecular weight, and therefore, is suitable for several uses in which biocompatibility and strength are required, such as a medical use.

## Claims

1. A process for producing an aramid silicone polymer **characterized by** reacting
(A) a both-terminal amino-modified diorganopolysiloxane having a group represented by the following formula: -B-NH₃ wherein B represents a divalent hydrocarbon group, at each of both terminals of a molecular chain,
(B) an aromatic diamine, and
(C) an aromatic dicarboxylic acid dihalide,
in the presence of (D) an inorganic base, in (S1) water and (S2) an aprotic organic solvent, at a temperature of 10°C or more.

2. The process according to claim 1, wherein the reaction is an interfacial polycondensation.

3. The process according to claim 1 or 2, wherein the aromatic dicarboxylic acid dihalide (C) is added to a mixture obtained by combining a mixture of the inorganic base (D) and the water (S1) with a mixture of the both-terminal amino-modified diorganopolysiloxane (A), the aromatic diamine (B) and the aprotic organic solvent (S2), at a temperature of 10°C or more to react them.

4. The process according to claim 3, wherein the aromatic dicarboxylic acid dihalide (C) is in the form of a mixture with the aprotic organic solvent (S2).

5. The process according to any one of claims 1 to 4, wherein the aforementioned both-terminal amino-modified diorganopolysiloxane (A) is represented by the following general formula: 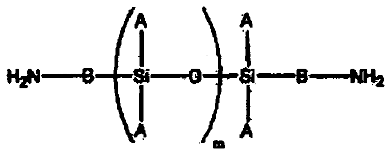 wherein B represents a divalent hydrocarbon group; A independently represents a monovalent hydrocarbon group; and m represents an integer ranging from 1 to 100.

6. The process according to claim 5, wherein the m ranges from 1 to 20.

7. The process according to any one of claims 1 to 6, wherein the aprotic organic solvent (S2) is non-miscible with water.

8. The process according to any one of claims 1 to 7, wherein the inorganic base (D) is at least one selected from the group consisting of alkali metal hydroxides, alkaline earth metal hydroxides, alkali metal carbonates, alkali metal bicarbonates, and alkaline earth metal carbonates.

9. The process according to any one of claims 1 to 8, wherein the aprotic organic solvent (S2) is at least one selected from the group consisting of ether-based solvents, halogenated hydrocarbon-based solvents, sulfoxide-based solvents, amide-based solvents, ester-based solvents, and ether ester-based solvents.

10. The process according to any one of claims 1 to 9, wherein a weight ratio of a weight of the aromatic diamine (B) with respect to a total weight of the both-terminal amino-modified diorganopolysiloxane (A) and the aromatic diamine (B) ranges from 0.01 to 0.6.

11. The process according to any one of claims 1 to 10, wherein a molar ratio of total moles of the both-terminal amino-modified diorganopolysiloxane (A) and the aromatic diamine (B) with respect to moles of the aromatic dicarboxylic acid dihalide (C) ranges from 0.8 to 1.2.

12. The process according to any one of claims 1 to 11, wherein a ratio of equivalent weight of the inorganic base (D) with respect to equivalent weight of the aromatic dicarboxylic acid dihalide (C) ranges from 1 to 2.

13. The process according to any one of claims 1 to 12, wherein a weight ratio of the water (S1) and the aprotic organic solvent (S2) ranges from 1:10 to 10:1.

## Patentansprüche

1. Verfahren zum Herstellen eines Aramid-Silikonpolymers, **gekennzeichnet durch** Umsetzen
(A) eines an beiden Enden aminomodifizierten Diorganopolysiloxans mit einer Gruppe gemäß der folgenden Formel: -B- NH₂, wobei B für eine zweiwertige Kohlenwasserstoffgruppe steht, an jedem der beiden Enden einer Molekülkette,
(B) eines aromatischen Diamins und
(C) eines aromatischen Dicarbonsäuredihalogenids in Gegenwart von (D) einer anorganischen Base in (S1) Wasser und (S2) einem aprotischen organischen Lösungsmittel bei einer Temperatur von 10 °C oder mehr.

2. Verfahren nach Anspruch 1, wobei die Reaktion eine Grenzflächenpolykondensation ist.

3. Verfahren nach Anspruch 1 oder 2, wobei das aromatische Dicarbonsäuredihalogenid (C) zu einer Mischung gegeben wird, die durch Kombinieren einer Mischung der anorganischen Base (D) und des Wassers (S1) mit einer Mischung des an beiden Enden aminomodifizierten Diorganopolysiloxans (A), des aromatischen Diamins (B) und des aprotischen organischen Lösungsmittels (S2) bei einer Temperatur von 10 °C oder mehr, um diese umzusetzen, erhalten wird.

4. Verfahren nach Anspruch 3, wobei das aromatische Dicarbonsäuredihalogenid (C) in der Form einer Mischung mit dem aprotischen organischen Lösungsmittel (S2) vorliegt.

5. Verfahren nach einem der Ansprüche 1 bis 4, wobei das vorstehend genannte an beiden Enden aminomodifizierte Diorganopolysiloxan (A) durch die folgende allgemeine Formel dargestellt wird: 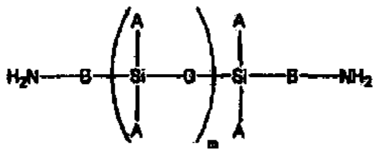 wobei B für eine zweiwertige Kohlenwasserstoffgruppe steht; A unabhängig für eine einwertige Kohlenwasserstoffgruppe steht; und m für eine ganze Zahl im Bereich von 1 bis 100 steht.

6. Verfahren nach Anspruch 5, wobei das m im Bereich von 1 bis 20 steht.

7. Verfahren nach einem der Ansprüche 1 bis 6, wobei das aprotische organische Lösungsmittel (S2) mit Wasser nicht mischbar ist.

8. Verfahren nach einem der Ansprüche 1 bis 7, wobei die anorganische Base (D) mindestens eine ist, die ausgewählt ist aus der Gruppe bestehend aus Alkalimetallhydroxiden, Erdalkalimetallhydroxiden, Alkalimetallcarbonaten, Alkalimetallbicarbonaten und Erdalkalimetallcarbonaten.

9. Verfahren nach einem der Ansprüche 1 bis 8, wobei das aprotische organische Lösungsmittel (S2) mindestens eines ist, das ausgewählt ist aus der Gruppe, bestehend aus etherbasierten Lösungsmitteln, halogenierten kohlenwasserstoffbasierten Lösungsmitteln, sulfoxidbasierten Lösungsmitteln, amidbasierten Lösungsmitteln, esterbasierten Lösungsmitteln und ether-esterbasierten Lösungsmitteln.

10. Verfahren nach einem der Ansprüche 1 bis 9, wobei ein Gewichtsverhältnis eines Gewichts des aromatischen Diamins (B) in Bezug auf ein Gesamtgewicht des an beiden Enden aminomodifizierten Diorganopolysiloxans (A) und des aromatischen Diamins
(B) im Bereich von 0,01 bis 0,6 liegt.

11. Verfahren nach einem der Ansprüche 1 bis 10, wobei ein Molverhältnis der gesamten Molanzahl des an beiden Enden aminomodifizierten Diorganopolysiloxans (A) und des aromatischen Diamins (B) in Bezug auf die Molanzahl des aromatischen Dicarbonsäuredihalogenids (C) im Bereich von 0,8 bis 1,2 liegt.

12. Verfahren nach einem der Ansprüche 1 bis 11, wobei ein Verhältnis von Gewichtsäquivalent der anorganischen Base (D) in Bezug auf das Gewichtsäquivalent des aromatischen Dicarbonsäuredihalogenids (C) im Bereich von 1 bis 2 liegt.

13. Verfahren nach einem der Ansprüche 1 bis 12, wobei ein Gewichtsverhältnis des Wassers (S1) und des aprotischen organischen Lösungsmittels (S2) im Bereich von 1:10 bis 10:1 liegt.

## Revendications

1. Procédé de production d'un polymère d'aramide et de silicone **caractérisé par** la mise en réaction
(A) d'un diorganopolysiloxane à modification amino aux deux extrémités ayant un groupe représenté par la formule suivante : -B- NH2 dans laquelle B représente un groupe hydrocarboné divalent, à chacune des deux extrémités d'une chaîne moléculaire,
(B) une diamine aromatique, et
(C) un dihalogénure d'acide dicarboxylique aromatique, en présence de (D) une base inorganique, dans de l'eau (S1) et (S2) un solvant organique aprotique, à une température d'au moins 10 °C.

2. Procédé selon la revendication 1, dans lequel la réaction est une polycondensation interfaciale.

3. Procédé selon la revendication 1 ou 2, dans lequel le dihalogénure d'acide dicarboxylique aromatique (C) est ajouté à un mélange obtenu en combinant un mélange de la base inorganique (D) et de l'eau (S1) avec un mélange du diorganopolysiloxane à modification amino sur les deux extrémités (A), de la diamine aromatique (B) et du solvant organique aprotique (S2), à une température d'au moins 10 °C pour les faire réagir.

4. Procédé selon la revendication 3, dans lequel le dihalogénure d'acide dicarboxylique aromatique (C) est sous la forme d'un mélange avec le solvant organique aprotique (S2).

5. Procédé selon l'une quelconque des revendications 1 à 4, dans lequel le diorganopolysiloxane à modification amino sur les deux extrémités (A) mentionné ci-dessus, est représenté par la formule générale suivante : 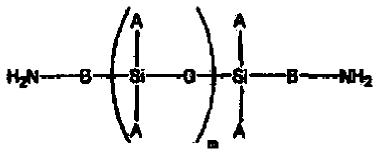 dans laquelle B représente un groupe hydrocarboné divalent ; A représente indépendamment un groupe hydrocarboné monovalent ; et m représente un entier allant de 1 à 100.

6. Procédé selon la revendication 5, dans lequel m va de 1 à 20.

7. Procédé selon l'une quelconque des revendications 1 à 6, dans lequel le solvant organique aprotique (S2) est non miscible avec l'eau.

8. Procédé selon l'une quelconque des revendications 1 à 7, dans lequel la base inorganique (D) est au moins une choisie dans le groupe constitué des hydroxydes de métaux alcalins, hydroxydes de métaux alcalino-terreux, carbonates de métaux alcalins, bicarbonates de métaux alcalins, et des carbonates de métaux alcalino-terreux.

9. Procédé selon l'une quelconque des revendications 1 à 8, dans lequel le solvant organique aprotique (S2) est au moins un choisi dans le groupe constitué des solvants à base d'éthers, solvants à base d'hydrocarbures halogénés, solvants à base de sulfoxyde, solvants à base d'amides, solvants à base d'esters et des solvants à base d'éthers-esters.

10. Procédé selon l'une quelconque des revendications 1 à 9, dans lequel un rapport pondéral d'un poids de la diamine aromatique (B) par rapport à un poids total du diorganopolysiloxane à modification amino sur les deux extrémités (A) et de la diamine aromatique (B) va de 0,01 à 0,6.

11. Procédé selon l'une quelconque des revendications 1 à 10, dans lequel un rapport molaire des moles totales du diorganopolysiloxane à modification amino sur les deux extrémités (A) et de la diamine aromatique (B) par rapport aux moles du dihalogénure d'acide dicarboxylique aromatique (C) va de 0,8 à 1,2.

12. Procédé selon l'une quelconque des revendications 1 à 11, dans lequel un rapport de poids équivalent de la base inorganique (D) par rapport au poids équivalent du dihalogénure d'acide dicarboxylique (C) va de 1 à 2.

13. Procédé selon l'une quelconque des revendications 1 à 12, dans lequel un rapport pondéral de l'eau (S1) et du solvant organique aprotique (S2) va de 1:10 à 10:1.
